# EUROPÄISCHE PATENTANMELDUNG

(11) **EP 1 531 256 A2**
(43) Veröffentlichungstag der Anmeldung: **18.05.2005**
(21) Anmeldenummer: 04018209.9
(22) Anmeldetag: 31.07.2004
(51) Int. Cl.: F02M 35/10

(54) **Luftansaugkanalsystem für eine Verbrennungskraftmaschine**

(30) Priorität: 12.11.2003 DE 10352781
(71) Anmelder: Pierburg GmbH, 41460 Neuss (DE)
(72) Erfinder: Simons, Nobert, 40221 Düsseldorf (DE)
(74) Vertreter: Ter Smitten, Hans

(57) **Zusammenfassung**

Die Erfindung betrifft ein Luftansaugkanalsystem (1) welches mehrteilig ausgeführt ist, also zumindest aus einem Gehäuseunterteil (6) und einem Gehäuseoberteil (7) besteht. In eines der Gehäuseteile (6, 7) ist erfindungsgemäß ein Einschubelement (8) einlegbar, welches das Luftansaugkanalsystem (1) teilweise axial begrenzt und dazu dient, daß an ihm eine Klappenvorrichtung (3) vormontiert werden kann. Am Einschubelement (8) ist zusätzlich eine Stellvorrichtung (9) und ein Positionssensor (10) anbringbar, welche ebenfalls gemeinsam mit der Klappenvorrichtung (3) und dem Einschubelement (8) vormontiert in das Luftansaugkanalsystem einbringbar sind, wobei in einer bevorzugten Ausführungsform im Einschubelement zusätzlich eine Kupplung vorhanden ist, so daß zwei Klappenvorrichtungen (3) gemeinsam montiert und im eingebauten Zustand verstellt werden können.

## Beschreibung

Die Erfindung betrifft ein Luftansaugkanalsystem für eine Verbrennungskraftmaschine mit einem Sammeleinlaßkanal und mehreren Einzelansaugkanälen, welches mehrere Gehäuseteile und zumindest eine Klappenvorrichtung, welche jeweils mehrere auf einer Welle angeordnete Klappenkörper aufweist, im Luftansaugkanalsystem gelagert ist und von einer Stellvorrichtung angetrieben ist, aufweist.

Luftansaugkanalsysteme für Verbrennungskraftmaschinen sind allgemein bekannt und werden in einer Vielzahl von Anmeldungen beschrieben. Die in einem solchen Luftansaugkanalsystem angeordneten Klappenvorrichtungen können dabei beispielsweise als Drallklappen oder Tumbleklappen zur Beeinflussung der Gemischaufbereitung oder als Schaltklappen zur Veränderung der wirksamen Schwingrohrlänge dienen. Dabei ist es üblich, die Gehäuse der Luftansaugkanalsysteme mehrteilig auszuführen und erst anschließend fertig zu montieren, da auf diese Art preisgünstigere und bessere Herstellungsverfahren, wie beispielsweise Druckgußverfahren, und Materialien verwendet werden können.

In der DE 195 04 256 wird ein Luftansaugkanalsystem beschrieben, welches als Schaltsaugrohr ausgeführt ist, so daß je nach Betriebszustand des Motors eine Kurzschlußöffnung durch eine Klappenvorrichtung, welche hier als Schaltklappenvorrichtung dient, freigegeben werden kann, wodurch eine Verkürzung der wirksamen Schwingrohrlänge erfolgt. Über einen Sammeleinlaßkanal gelangt Luft dabei in die Einzelansaugkanäle. Die verwendeten Absperrklappen sind auf einer gemeinsamen Schaltwelle angeordnet, welche durch eine Stellvorrichtung in Drehung versetzbar ist. Das Gehäuse ist mehrteilig ausgeführt, so daß die Schaltklappenvorrichtung vor dem Zusammenbau der Gehäuseteile in eines der Gehäuseteile einlegbar ist. Die gesamte Klappenvorrichtung ist somit im Gehäuse des Luftansaugkanalsystems gelagert, wobei die Schaltklappenwelle beim Einlegen in das Gehäuseteil durch eine Öffnung im Luftansaugkanalsystem nach außen geführt werden muss, um dort mit der Stellvorrichtung in Wirkverbindung gebracht zu werden.

In der DE 196 14 474 A1 wird ebenfalls ein Luftansaugkanalsystem für eine Verbrennungskraftmaschine offenbart, bei der die Einzelansaugkanäle um den Sammeleinlaßkanal herum angeordnet sind und das Gehäuse des Luftansaugkanalsystems aus einem Oberteil und einem Unterteil besteht, in welches die Klappenvorrichtung mit entsprechenden Passtücken vor dem Zusammenbau des Gehäuses eingebracht werden kann. Auch hier wird die Schaltwelle durch eines der Gehäuseteile zur Verbindung mit der Stellvorrichtung nach außen geführt.

In der DE 101 46 750 A1 wird ein mehrteiliges Luftansaugkanalsystem offenbart, bei dem eine Tumbleklappenvorrichtung in den Einzelansaugkanälen angeordnet ist, welche ebenfalls vor dem Zusammenbau der Gehäuseteile in eines der Gehäuseteile einlegbar ist. Auch hier reicht die Tumbleklappenwelle durch eine Öffnung aus dem Gehäuse heraus.

Nachteilig an all diesen bekannten Ausführungsformen ist, daß der Durchtritt für die Anbindung der Klappenwelle an die Stellvorrichtung an einem der Gehäuseteile angeordnet ist, so daß eine gesonderte Abdichtung zwischen Welle und Gehäuse des Luftansaugkanalsystems notwendig wird. Durch das gleichzeitige Einführen der Schaltklappenwelle in die entsprechenden Lagerstellen und durch die im Luftansaugkanalgehäuse vorhandene Öffnung kann ein Verkanten während der Montage die Folge sein. Des weiteren ist insbesondere bei in Druckguß ausgeführten Luftansaugkanalsystemen eine selbstfurchende Verschraubung nur ab einer bestimmten Größe der Schrauben möglich, so daß zur Anbindung der Stellvorrichtung oder eventuell vorhandener Positionssensoren unnötig große Schrauben verwendet werden müssten. Des weiteren müssen die Klappenvorrichtungen im Gehäuse montiert sein, bevor die Stellvorrichtung beziehungsweise die Positionssensoren am Gehäuse montiert werden können. Dies erschwert durch die relativ großen zu bewegenden Teile zusätzlich die Handhabung bei der Montage.

Aufgabe der Erfindung ist es daher, ein Luftansaugkanalsystem zur Verfügung zu stellen, bei dem der Montageaufwand verringert werden kann und somit ein einfacher und schnellerer Einbau der Klappenvorrichtung sowie der Stellvorrichtung mit den Positionssensoren möglich wird, wobei möglichst kleine Befestigungsschrauben ohne notwendige Bearbeitung des Gehäuses verwendet werden sollen.

Diese Aufgabe wird dadurch gelöst, daß zumindest ein Einschubelement im zusammen gebauten Zustand des Luftansaugkanalsystems zwischen zwei Gehäuseteilen angeordnet ist, durch welches die zumindest eine Klappenwelle oder ein zumindest drehfest mit der Klappenwelle verbundener Wellenstumpf axial von außen in das Luftansaugkanalsystem reicht. Hierdurch ist es möglich, die gesamte Klappenvorrichtung mit Welle und darauf angeordneten Klappen an einem einfach handzuhabenden Teil vorzumontieren und komplett in ein Gehäuseteil des Luftansaugkanalsystems einzulegen, wodurch die Abdichtung am Durchtritt der Welle deutlich vereinfacht wird, da bei der Vormontage die Klappenwelle gerade durch die entsprechenden Öffnungen im Einschubelement geschoben werden kann.

In einer weiterführenden Ausführungsform ist das zumindest eine Einschubelement an einer das Luftansaugkanalsystem axial begrenzenden Gehäusewand angeordnet und die Stellvorrichtung ist auf einer vom Luftansaugkanalsystem gesehen außen liegenden Wand des zumindest einen Einschubelementes angeordnet und mit der zumindest einen Welle oder dem Wellenstumpf unmittelbar verbunden. Dies ermöglicht zusätzlich die Vormontage der Stellvorrichtung am Einschubelement, so daß auch hier Montageschritte am schwer zu handhabenden gesamten Luftansaugkanalsystem entfallen. Zusätzlich können bei einer solchen Ausführung zur Befestigung der Stellvorrichtung relativ kleine Schrauben verwendet werden, da das Einschubelement üblicherweise nicht aus Druckguß sondern beispielsweise aus Kunststoff hergestellt ist.

In einer alternativen Ausführungsform ist das zumindest eine Einschubelement an einer das Luftansaugkanalsystem axial begrenzenden Gehäusewand angeordnet und die Stellvorrichtung ebenfalls axial außen an dieser Gehäusewand angeordnet und mit der zumindest einen Welle oder dem Wellenstumpf über zumindest ein Koppelelement verbunden. Somit können weiter voneinander entfernte Wellen einzeln mit dem Einschubelement vormontiert werden und nach dem Einlegen in das Luftansauggehäuse mit einer gemeinsamen Stellvorrichtung verbunden werden, welche einzeln am Gehäuse montiert werden kann.

In einer weiterführenden Ausführungsform ist an der axial außen liegenden Wand des zumindest einen Einschubelementes ein Positionssensor befestigt, so daß auch dieser vormontiert mit dem Einschubelement und der Klappenvorrichtung in das Luftansaugkanalsystem eingebracht werden kann.

In einer bevorzugten Ausführungsform weist das Einschubelement eine über den gesamten Umfang verlaufende radial begrenzende Außenwand auf, welche zumindest teilweise mit einer Nut ausgeführt ist, die mit Federn, welche an den radialen Kanten der axial begrenzenden Gehäusewände der beiden anderen Gehäuseteile zur Herstellung einer Nut-Feder-Verbindung im zusammen gebauten Zustand angeordnet sind, zusammen wirkt. Durch eine solche Nut-Feder-Verbindung findet eine Fixierung des Einschubelementes an am ersten der Gehäuseteile durch einfaches Aufschieben statt, ohne zusätzliche Montageschritte durchführen zu müssen. Eine weitere Lagefixierung insbesondere in axialer Richtung erfolgt dann durch aufsetzen des jeweils zweiten Gehäuseteils.

In einer weiterführenden Ausführung ist zumindest ein Teil eines Gehäuses der Stellvorrichtung und/oder eines Gehäuses des Positionssensors einstückig mit der axial außen liegenden Wand des Einschubelementes ausgeführt, wodurch zusätzliche Bauteile eingespart werden können und die Montage der Einzelteile der Stellvorrichtung beziehungsweise des Positionssensors direkt am Einschubelement stattfinden kann.

In einer alternativen Ausführungsform weist das Einschubelement an seiner axialen Außenwand Butzen auf, an denen der Positionssensor und / oder die Stellvorrichtung mittels selbstfurchender Schrauben befestigbar ist. Bei einer Ausführung des Einschubelementes in Kunststoff können somit kleine Schrauben verwendet werden, ohne zusätzliche Bearbeitungsschritte am Gehäuse vornehmen zu müssen.

In einer bevorzugten Ausführungsform ist das Einschubelement in Achsrichtung gesehen im wesentlichen V- oder U-förmig ausgebildet, so daß eine zusätzliche Fixierung in radialer Richtung oder in Umfangsrichtung automatisch durch das Einstecken des Einschubelementes im ersten Gehäuseteil erreicht wird.

In einer weiterführenden Ausführungsform ist an der radial begrenzenden Außenumfangswand des Einschubelementes eine separate oder angespritzte Dichtung angeordnet, welche mit dem Einschubelement in das erste Gehäuseteil vor Anbringen des zweiten Gehäuseteils einschiebbar ist. Somit wird durch das Aufeinanderstecken der beiden Gehäuseteile eine zuverlässige Abdichtung zwischen den beiden Gehäuseteilen und dem Einschubelement erreicht.

In einer bevorzugten Ausführungsform sind zwischen der zumindest einen Welle oder dem Wellenstumpf und Öffnungen in den axial begrenzenden Wänden des zumindest einen Einschubelementes, durch die die zumindest eine Welle reicht ein oder mehrere Lippendichtringe angeordnet, die für eine zuverlässige Abdichtung zwischen der Welle beziehungsweise dem Wellenstumpf und dem Einschubelement und somit zwischen dem äußeren und dem inneren Bereich des Luftansaugkanalsystems sorgen. Auch Strömungen vom oder zum Steller oder Sensor werden durch diese Dichtungen vermieden.

In einer besonderen Ausführungsform weist das Luftansaugkanalsystem ein Gehäuseoberteil und ein Gehäuseunterteil auf, welche im zusammen gesetzten Zustand einen zentralen Sammeleinlaßkanal und mehrere um den zentralen Sammeleinlaßkanal angeordnete Einzelansaugkanäle bilden, wobei die Einzelansaugkanäle zur fluidischen Verbindungen mit dem Sammeleinlaßkanal erste Öffnungen und zweite, als Kurzschlußkanäle dienende Öffnungen aufweisen, welche von der Klappenvorrichtung, welche als Schaltklappenvorrichtung dient, derart beherrscht sind, daß durch Drehung der Schaltklappenwelle die Schaltklappen den Kurzschlußkanal freigeben oder verschließen und wobei das Einschubelement zwischen dem Oberteil und dem Unterteil des Luftansaugkanalsystems angeordnet ist. Dementsprechend handelt es sich um ein längenveränderliches Luftansaugkanalsystem, bei dem die Schaltklappenvorrichtung mit dem Einschubelement vormontiert in das Oberteil des Luftansaugkanalsystems auf einfache Art eingeschoben werden kann. Durch die Verwendung eines solchen Luftansaugkanalsystems kann die wirksame Schwingrohrlänge des Saugrohres umgestellt werden, so daß eine bessere Zylinderfüllung die Folge ist.

In einer dazu weiterführenden Ausführungsform weist das Einschubelement eine in Bezug auf das Luftansaugkanalsystem axial begrenzende Außenwand und die radial begrenzende Außenwand auf, wodurch ein Raum gebildet ist, der durch einen axial innen liegenden Deckel verschließbar ist und in dem zwei Wellenstümpfe angeordnet sind, die mit je einer Schaltklappenwelle zumindest drehfest verbunden sind und welche über eine Kupplung, die in dem Raum angeordnet ist, miteinander gekoppelt sind. Hierdurch wird es möglich, beispielsweise bei einem Verbrennungsmotor der V-Bauart beide vorhandenen Schaltklappenwellen über eine Stellvorrichtung zu steuern, ohne außen liegende Kupplungsteile, welche der Verschmutzung im Motorraum ausgesetzt wären, anbringen zu müssen. Des weiteren wird durch diese Ausführungsform eine Vormontage beider Schaltklappenwellen sowie der Kupplung am Einschubelement ermöglicht, bevor die gesamte Einheit in das Gehäuse eingelegt wird. Eine Abdichtung zwischen Welle und Deckel zur Vermeidung von Strömungen in das Luftansaugkanalsystem oder aus dem Luftansaugkanalsystem kann auch hier über Lippendichtringe erfolgen.

In einer weiterführenden Ausführungsform ist die Kupplung aus Zahnkranzsegmenten und gegebenenfalls einem Zahnrad, welches im Einschubelement gelagert ist gebildet, welche miteinander kämmen. Insbesondere bei Verwendung einer Evolventenverzahnung folgt daraus eine spielfreie Kupplung, die eine synchrone Verstellung der Schaltklappen sicher stellt. Es ist dabei sowohl möglich, über zwei Zahnkranzsegmente eine gegenläufige Drehung der Schaltklappenwellen zu verwirklichen als auch bei Zwischenschaltung des zusätzlichen im Einschubelement angeordneten gekoppelten Zahnrades eine gleichläufige Drehrichtung zu verwirklichen.

In einer weiterführenden Ausführungsform ist je eines der Zahnkranzradsegmente auf den beiden Wellenstümpfen zumindest drehfest angeordnet. Diese drehfeste Anordnung kann entweder über eine Nutfederverbindung erfolgen oder aber die Zahnkranzsegmente werden direkt mit den vorhandenen Wellenstümpfen gespritzt. Somit wird eine direkte Kopplung zwischen den beiden Schaltklappenwellen erreicht, die die benötigten Funktionen über eine lange Lebensdauer sicher stellt.

In einer alternativen Ausführungsform weist das Luftansaugkanalsystem ein Gehäuseoberteil und ein Gehäuseunterteil aufweist, welche im zusammen gesetzten Zustand einen zentralen Sammeleinlaßkanal und mehrere um den zentralen Sammeleinlaßkanal angeordnete Einzelansaugkanäle bilden, wobei jeder Einzelansaugkanal in seinem in Strömungsrichtung der Luft gelegenen Endabschnitt eine Klappenvorrichtung aufweist, welche als Drall- oder Tumbleklappenvorrichtung dient, wobei durch Drehung der in das zumindest eine Einschubelement reichenden Welle mittels der Stellvorrichtung der frei durchströmbare Querschnitt jedes Einzelansaugkanals regelbar ist und wobei das Einschubelement zwischen dem Oberteil und dem Unterteil des Luftansaugkanalsystems angeordnet ist und mit dem Positionssensor fest verbunden ist. Hierdurch wird es möglich, beispielsweise bei einem Verbrennungsmotor der V-Bauart beide vorhandenen Drall- oder Tumbleklappenwellen vorzumontieren und in eines der Gehäuseteile einzulegen, wobei eine genaue Positionierung des Sensors auf dem Einschubelement und somit zur Welle im vormontierten Zustand ermöglicht wird.

In einer weiterführenden Ausführungsform ist das zumindest eine Einschubelement mit seinen begrenzenden radialen und axialen Außen- und Innenwänden einstückig hergestellt, so dass bei der Montage lediglich die Dichtungen der Positionssensor und die Welle eingebracht werden müssen.

Alle besprochenen Ausführungsformen bewirken durch die ermöglichte Vormontage der verschiedenen Vorrichtungen am Einschubelement eine deutlich vereinfachte Endmontage und damit eine Reduzierung der Herstellkosten. Auf eine zusätzliche gesonderte Abdichtung zwischen dem Innenraum und dem äußeren Bereich des Luftansaugkanalsystems kann verzichtet werden und die Funktionssicherheit auch miteinander gekoppelter Klappenvorrichtungen wird erhöht.

Zwei Ausführungsbeispiele anhand einer Schaltklappenvorrichtung und einer Tumbleklappenvorrichtung für einen Verbrennungsmotor in V-Bauform sind in den Zeichnungen dargestellt und werden nachfolgend beschrieben.

Figur 1 zeigt eine Seitenansicht eines erfindungsgemäßen Luftansaugkanalgehäuses mit Einschubelement für Schaltklappen im zusammengebauten Zustand.

Figur 2 zeigt eine perspektivische Darstellung des Einschubelementes aus Figur 1 in einem Oberteil des Luftansaugkanalsystems.

Figur 3 zeigt in perspektivischer Darstellung das Einschubelement gemäß Figur 2 im geöffneten Zustand also ohne Deckel.

Figur 4 zeigt ein Einschubelement für Drall- oder Tumbleklappen in perspektivischer Ansicht.

Figur 5 zeigt ein Unterteil eines Luftansaugkanalsystems mit zwei Einschubelementen gemäß Figur 4.

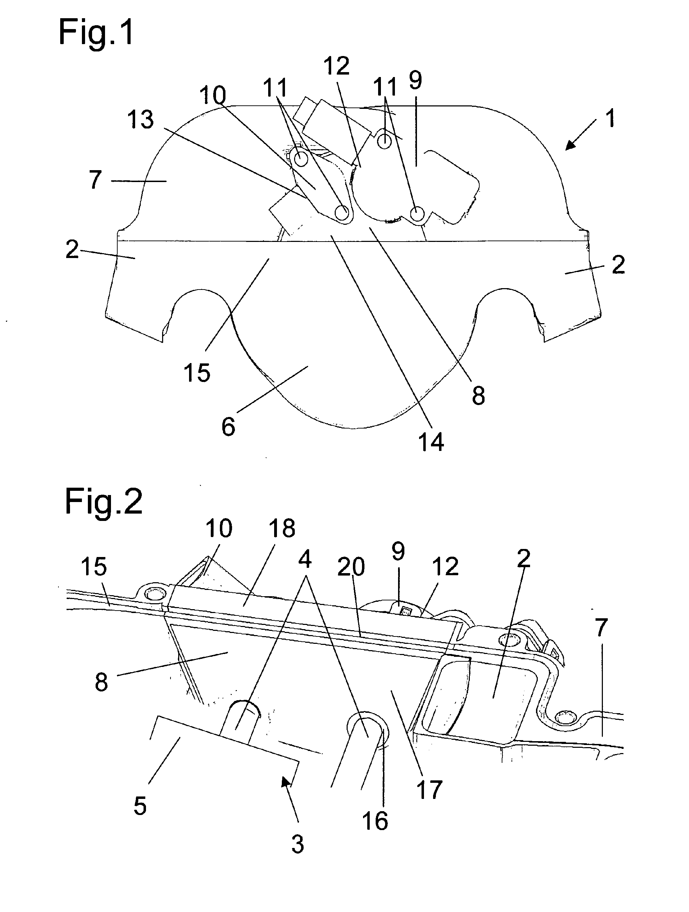

Das in Figur 1 dargestellte Luftansaugkanalsystem 1 weist einen in bekannter Weise zentral angeordneten Sammeleinlaßkanal auf, welcher fluidisch mit um den Sammeleinlaßkanal herum angeordneten Einzelansaugkanälen 2 verbunden ist. Es handelt sich um ein Luftansaugkanalsystem 1 für einen Verbrennungsmotor in V-Bauweise, so daß ein Teil der Einzelansaugkanäle 2 zu einer rechten Zylinderbank und ein anderer Teil zu einer linken Zylinderbank führen. Zwischen dem Sammeleinlaßkanal und den Einzelansaugkanälen 2 besteht jeweils eine erste nicht dargestellte Öffnung, durch die Luft vom Sammeleinlaßkanal über einen langen Ansaugweg zu den Zylinderbänken gelangen kann sowie eine zweite Öffnung, welche als Kurzschlußkanal dient, so daß die wirksame Schwingrohrlänge, also der durchströmte Teil jedes Einzelansaugkanals 2, in bekannter Weise verkürzt ist. Diese Kurzschlußkanäle werden von einer Klappenvorrichtung 3, welche hier als Schaltklappenvorrichtung ausgeführt ist, beherrscht.

Die Klappenvorrichtung 3 besteht aus einer Klappenwelle 4 und darauf angeordneten Klappenkörpern 5, welche im eingebauten Zustand im Kurzschlußkanal zu liegen kommen und diesen je nach Winkelstellung der Klappenwelle 4 freigeben oder verschließen können. Es ist ebenfalls bekannt, ein solches Luftansaugkanalsystem 1 zweiteilig mit einem Gehäuseunterteil 6 und einem Gehäuseoberteil 7 auszuführen, wie es ebenfalls in Figur 1 dargestellt ist. Erfindungsgemäß ist nun ein Einschubelement 8 zwischen dem Gehäuseunterteil 6 und dem Gehäuseoberteil 7 angeordnet, an welchem im vorliegenden Ausführungsbeispiel eine Stellvorrichtung 9 zur Verstellung der Klappenvorrichtung 3 sowie ein Positionssensor 10 zur Ermittlung der jeweiligen Klappenstellung befestigt sind. Die Stellvorrichtung 9 und der Positionssensor 10 werden über Schrauben 11 mit ihren Gehäusen 12, 13 an einer axial außen liegenden Wand 14 des Einschubelementes 8 befestigt.

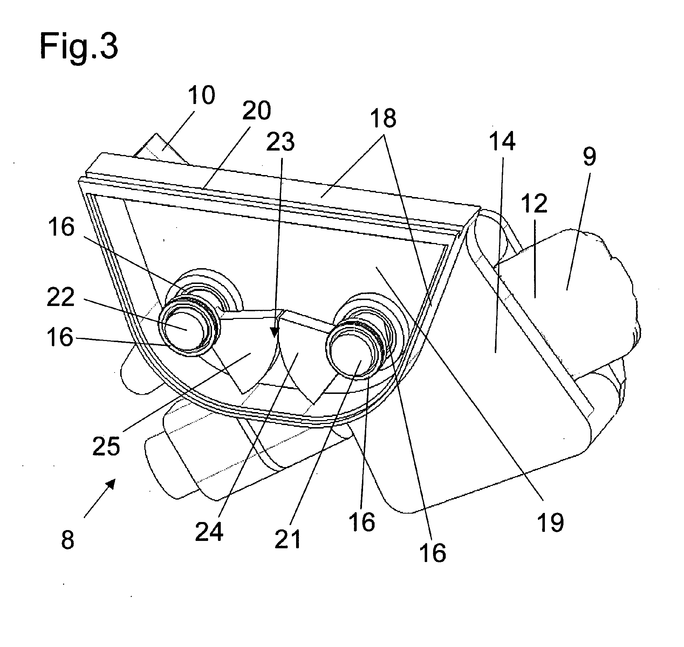

Das Einschubelement 8 kann nun, wie in Figur 2 dargestellt, mit der bereits an dem Einschubelement 8 vormontierten Klappenvorrichtung 3, sowie der Stellvorrichtung 9 und dem Positionssensor 10 in das Gehäuseoberteil 7 eingelegt werden. Das Einschubelement 8 kommt dabei in einer axial begrenzenden Gehäusewand 15 des Saugrohres 1 zu liegen. Die Klappenwelle 4 ragt axial durch das Einschubelement 8, wobei Lippendichtringe 16 die beiden Klappenwellen 4 zum Inneren des Luftansaugkanalsystems 1 hin abdichten.

In Figur 3 ist dieses Einschubelement 8 im geöffneten Zustand ohne einen für den Verschluss notwendigen Deckel 17, wie er Figur 2 zu entnehmen ist, dargestellt. Es besteht im wesentlichen aus der im eingebauten Zustand axial außen liegenden Wand 14 sowie einer radial begrenzenden Außenumfangswand 18. Ein durch diese Wände 14, 18 begrenzter Raum 19 wird durch den Deckel 17 verschlossen, so daß dieser Deckel 17 wie in Figur 2 ersichtlich als axial innen liegende Begrenzungswand des Luftansaugkanalsystem 1 in diesem Bereich dient. An zumindest einem Teil der radial begrenzenden Außenumfangswand 18 des Einschubelementes 8 ist eine Nut 20 angeordnet, welche mit einer hier nicht dargestellten Feder zusammen wirkt, welche an den zum Einschubelement 8 weisenden radialen Kanten des Luftansaugkanalsystems 1 ausgebildet ist. Es ist zu erkennen, daß das Einschubelement 8 im wesentlichen U-förmig ausgebildet ist und so in eine entsprechende U-förmige Ausnehmung an der axialen Begrenzungswand 15 des Luftansaugkanalsystems 1 eingelassen werden kann und dort eine durch seine Form in Umfangsrichtung sowie in radialer Richtung fest vorgegebene Position einnimmt, die in axialer Richtung durch die Nut-Feder-Verbindung fixiert wird. Zusätzlich zu den Nut-Feder-Verbindungen wird eine angespritzte oder separate nicht dargestellte Dichtung an der radialen Außenumfangswand 18 des Einschubelementes 8 angebracht, um einen dichten Verschluß zum Sammeleinlaßkanal beziehungsweise zu den Einzelansaugkanälen 2 herzustellen.

Im Raum 19 sind zwei Wellenstümpfe 21, 22 angeordnet, welche durch runde Öffnungen 26 in der axialen Außenwand 14 des Einschubelementes 8 reichen und in dieser Wand 14 gelagert sind. Sie reichen zur anderen Seite in das Luftansaugkanalsystem hinein. Die Abdichtung dieser Wellenstümpfe 21, 22 erfolgt sowohl am Deckel 17 als auch an der außen liegenden Wand 14 über Lippendichtringe 16. Die Enden der Wellenstümpfe 21, 22 sind so ausgeführt, daß sie mit den Klappenwellen 4 drehfest verbunden also gekoppelt werden können. Während der zweite Wellenstumpf 22 lediglich bis zur außen liegenden Wand 14, in der er gelagert ist, reicht, reicht der erste Wellenstumpf 21 durch diese Gehäusewand 15 in die Stellvorrichtung 9 und wird von dieser Stellvorrichtung 9 angetrieben, das heißt in Drehung versetzt. Für eine synchrone Verdrehung beider Wellenstümpfe 21, 22 und somit beider Klappenwellen 4 ist eine Kupplung 23 zwischen den beiden Wellenstümpfen angeordnet. Diese besteht aus zwei Zahnkranzsegmenten 24, 25, welche vorzugsweise eine Evolventenverzahnung aufweisen und miteinander kämmen, so daß eine gegenläufige aber synchrone Verstellung beider Klappenwellen 4 die Folge ist. Diese Zahnkranzsegmente 24,25 sind im vorliegenden Ausführungsbeispiel einstückig mit den Wellenstümpfen 21,22 gespritzt.

Das Einschubelement 8 kann somit mit bereits vormontierter Stellvorrichtung 9 und vormontierten Positionssensor 10 sowie vormontierter Kupplung 23 in das Oberteil 7 des Luftansaugkanalsystems 7 eingelegt werden, nachdem eine Verbindung zwischen der Klappenvorrichtung 3 und den Wellenstümpfen 21, 22 hergestellt wurde. Anschließend wird das Gehäuseunterteil 6 aufgesetzt, so daß eine vollständige Fixierung des Einschubelementes 8 folgt.

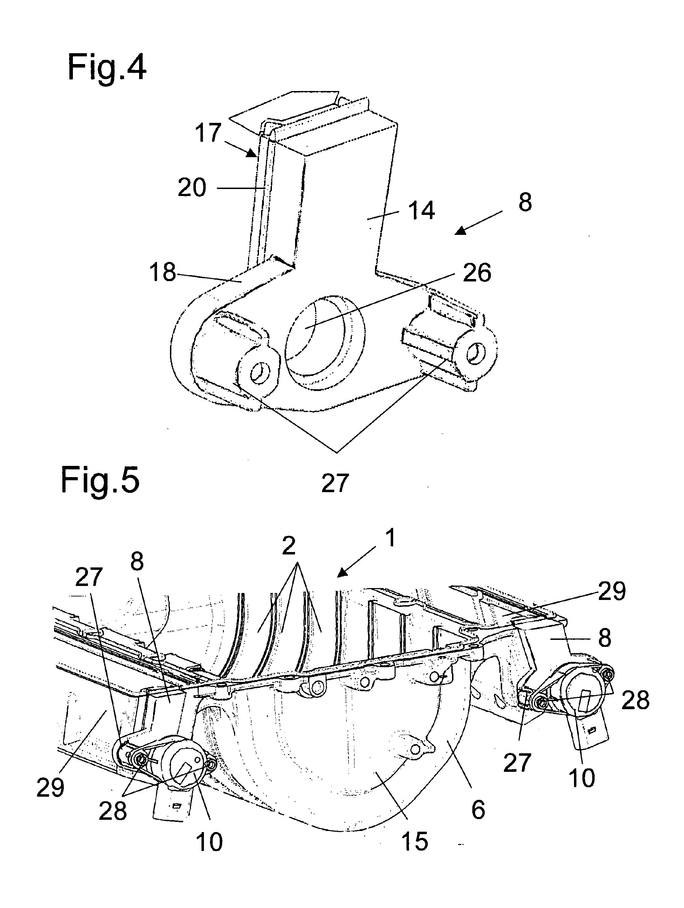

Das in Figur 4 dargestellte Ausführungsbeispiel ist ähnlich aufgebaut wie das vorbeschriebene, so dass für gleiche Bauteile gleiche Bezugszeichen verwendet werden und im wesentlichen auf die Unterschiede in der Ausführung eingegangen wird.

Das erfindungsgemäße Einschubelement 8 gemäß der Figuren 4 und 5 ist einstückig hergestellt, so dass die begrenzenden Außenwände 14,17,18 durch ein zusammenhängendes Bauteil gebildet werden. Am Einschubelement 8 sind zwei Butzen 27 ausgebildet, an denen ein Positionssensor 10 mittels selbstfurchender Schrauben 28 befestigt wird. Dieser erhält eine feste Zentrierung zur Welle 4 bei der Befestigung am Einschubelement 8 während der Vormontage. Die Welle 4, die hier als Tumbleklappenwelle dient, kann hier von der entgegengesetzten Seite durch die Öffnung 26 im Einschubelement 8 geschoben werden, da eine Kopplung innerhalb des Einschubelementes 8 entfällt. Daraufhin kann die gesamte Einheit, wie in Figur 5 ersichtlich in das Gehäuseunterteil 6 eingelegt werden. Durch Aufsetzen des Gehäuseoberteils 7 erfolgt wiederum die Befestigung des Einschubelementes 8 ohne zusätzliche Befestigungsmittel. Somit kommt die gesamte Tumbleklappenvorrichtung im Bereich eines in Strömungsrichtung gelegenen Endabschnittes 29 der Einzelansaugkanäle 2 zu liegen, wobei zur Aufnahme der Einschubelemente 8 wiederum entsprechend ausgeformte Ausnehmungen, hier am Gehäuseunterteil 6, vorgesehen sind.

In Figur 5 ist dies am Beispiel eines V-Motors dargestellt, so dass zu jeder der beiden Seiten des Luftansaugkanalsystems 1 diese Endabschnitte 29 ausgebildet sind und zwei Einschubelemente 8 mit entsprechenden Tumbleklappenvorrichtungen benötigt werden. Die Ansteuerung der Wellen 4 kann beispielsweise über eine zentral an der Außenwand 15 des Luftansaugkanalsystems 1 angeordnete Stellvorrichtung erfolgen, die über Koppelelemente, wie Gestänge, mit den beiden Wellen 4 verbunden werden kann.

Es wird deutlich, daß verschiedene Modifizierungen des dargestellten Systems denkbar sind. So kann beispielsweise durch Anordnung eines Zahnrades, welches im Raum 19 des Einschubelementes 8 angeordnet und gelagert wäre, die beiden Zahnkranzsegmente 24, 25 miteinander koppeln, so daß eine synchrone und gleichsinnige Drehung beider Klappenwellen 4 die Folge wäre. Auch eine Gestaltung bei der zumindest Teile der Gehäuse 12,13 der Stellvorrichtung 9 und des Positionssensors 10 einstückig mit der axial begrenzenden Wand 14 des Einschubelementes 8 hergestellt sind, ist ausführbar.

Es wird also ein Luftansaugkanalsystem geschaffen, bei dem die Klappenvorrichtung mit dem erfindungsgemäßen Einschubelement komplett vormontiert in das Luftansaugkanalsystem eingebracht werden kann, so daß eine deutlich erleichterte Montage die Folge ist, da die Durchführung durch das Gehäuse des Luftansaugkanalsystems entfällt. Insbesondere bei im Druckguß hergestellten Luftansaugkanalsystemen wird bei der Ausführung des Einschubelementes aus Kunststoff die Befestigung des Positionssensors und der Stellvorrichtung durch selbstfurchende kleine Schrauben ermöglicht. Die Lebensdauer wird durch die zuverlässige Abdichtung der Koppelelemente in der besonderen Ausführungsform sicher gestellt.

## Patentansprüche

1. Luftansaugkanalsystem für eine Verbrennungskraftmaschine mit einem Sammeleinlaßkanal und mehreren Einzelansaugkanälen, welches mehrere Gehäuseteile und zumindest eine Klappenvorrichtung, welche jeweils mehrere auf einer Welle angeordnete Klappenkörper aufweist, im Luftansaugkanalsystem gelagert ist und von einer Stellvorrichtung angetrieben ist, aufweist, **dadurch gekennzeichnet, daß** zumindest ein Einschubelement (8) im zusammen gebauten Zustand des Luftansaugkanalsystems (1) zwischen zwei Gehäuseteilen (6, 7) angeordnet ist, durch welches die zumindest eine Klappenwelle (4) oder ein zumindest drehfest mit der Klappenwelle (4) verbundener Wellenstumpf (21,22) axial von außen in das Luftansaugkanalsystem (1) reicht.

2. Luftansaugkanalsystem nach Anspruch 1, **dadurch gekennzeichnet, daß** das zumindest eine Einschubelement (8) an einer das Luftansaugkanalsystem (1) axial begrenzenden Gehäusewand (15) angeordnet ist und die Stellvorrichtung (9) auf einer vom Luftansaugkanalsystem (1) gesehen außen liegenden Wand (14) des zumindest einen Einschubelementes (8) angeordnet ist und mit der zumindest einen Welle (4) oder dem Wellenstumpf (21,22) unmittelbar verbunden ist.

3. Luftansaugkanalsystem nach Anspruch 1, **dadurch gekennzeichnet, daß** das zumindest eine Einschubelement (8) an einer das Luftansaugkanalsystem (1) axial begrenzenden Gehäusewand (15) angeordnet ist und die Stellvorrichtung (9) axial außen an der Gehäusewand (15) angeordnet ist und mit der zumindest einen Welle (4) oder dem Wellenstumpf (21, 22) über zumindest ein Koppelelement verbunden ist.

4. Luftansaugkanalsystem nach einem der vorhergehenden Ansprüche, **dadurch gekennzeichnet, daß** an der axial außen liegenden Wand (14) des zumindest einen Einschubelementes (8) ein Positionssensor (10) befestigt ist.

5. Luftansaugkanalsystem nach einem der vorhergehenden Ansprüche, **dadurch gekennzeichnet, daß** das zumindest eine Einschubelement (8) eine über den gesamten Umfang verlaufende radial begrenzende Außenwand (18) aufweist, welche zumindest teilweise mit einer Nut (20) ausgeführt ist, die mit Federn, welche an den radialen Kanten der axial begrenzenden Gehäusewände (15) der beiden anderen Gehäuseteile (6, 7) zur Herstellung einer Nut-Feder-Verbindung im zusammen gebauten Zustand angeordnet sind, zusammen wirkt.

6. Luftansaugkanalsystem nach einem der Ansprüche 2 oder 4, **dadurch gekennzeichnet, daß** zumindest ein Teil eines Gehäuses (12) der Stellvorrichtung (9) und/oder eines Gehäuses (13) des Positionssensors (10) einstückig mit der axial außen liegenden Wand (14) des Einschubelementes (8) ausgeführt ist.

7. Luftansaugkanalsystem nach einem der Ansprüche 1 bis 5, **dadurch gekennzeichnet, daß** das Einschubelement (8) an seiner axialen Außenwand (14) Butzen (27) aufweist, an denen der Positionssensor (10) und / oder die Stellvorrichtung (9) mittels selbstfurchender Schrauben (28) befestigbar ist.

8. Luftansaugkanalsystem nach einem der vorhergehenden Ansprüche, **dadurch gekennzeichnet, daß** das Einschubelement (8) in Achsrichtung gesehen im wesentlichen V- oder U-förmig ausgebildet ist.

9. Luftansaugkanalsystem nach einem der Ansprüche 5 bis 8, **dadurch gekennzeichnet, daß** an der radial begrenzenden Außenumfangswand (18) des zumindest einen Einschubelementes (8) eine separate oder angespritzte Dichtung angeordnet ist, welche mit dem zumindest einen Einschubelement (8) in das erste Gehäuseteil (7) vor Anbringen des zweiten Gehäuseteils (6) einschiebbar ist.

10. Luftansaugkanalsystem nach einem der vorhergehenden Ansprüche, **dadurch gekennzeichnet, daß** zwischen der zumindest einen Welle (4) oder dem Wellenstumpf (21, 22) und Öffnungen (26) in den axial begrenzenden Wänden (14, 17) des zumindest einen Einschubelementes (8), durch die die zumindest eine Welle (4) reicht ein oder mehrere Lippendichtringe (16) angeordnet sind.

11. Luftansaugkanalsystem nach einem der vorhergehenden Ansprüche, **dadurch gekennzeichnet, daß** das Luftansaugkanalsystem (1) ein Gehäuseoberteil (7) und ein Gehäuseunterteil (6) aufweist, welche im zusammen gesetzten Zustand einen zentralen Sammeleinlaßkanal und mehrere um den zentralen Sammeleinlaßkanal angeordnete Einzelansaugkanäle (2) bilden, wobei die Einzelansaugkanäle (2) zur fluidischen Verbindung mit dem Sammeleinlaßkanal erste Öffnungen und zweite, als Kurzschlußkanäle dienende Öffnungen aufweisen, welche von der Klappenvorrichtung (3), welche als Schaltklappenvorrichtung dient, derart beherrscht sind, daß durch Drehung der Schaltklappenwelle (4) die Schaltklappen (5) den Kurzschlußkanal freigeben oder verschließen, und wobei das Einschubelement (8) zwischen dem Oberteil (7) und dem Unterteil (6) des Luftansaugkanalsystems (1) angeordnet ist.

12. Luftansaugkanalsystem nach Anspruch 11, **dadurch gekennzeichnet, daß** das Einschubelement (8) eine im Bezug auf das Luftansaugkanalsystem (1) axial begrenzende Außenwand (14) und die radial begrenzende Außenwand (18) aufweist, wodurch ein Raum (19) gebildet ist, der durch einen axial innen liegenden Deckel (17) verschließbar ist und in dem zwei Wellenstümpfe (21, 22) angeordnet sind, die mit je einer Schaltklappenwelle (4) zumindest drehfest verbunden sind und welche über eine Kupplung (23), die in dem Raum (19) angeordnet ist, miteinander gekoppelt sind.

13. Luftansaugkanalsystem nach Anspruch 12, **dadurch gekennzeichnet, daß** die Kupplung (23) aus Zahnkranzsegmenten (24, 25) und gegebenenfalls aus einem Zahnrad, welches im Einschubelement (8) gelagert ist, gebildet ist, welche miteinander kämmen.

14. Luftansaugkanalsystem nach Anspruch 13, **dadurch gekennzeichnet, daß** je eines der Zahnkranzsegmente (24, 25) auf den beiden Wellenstümpfen (21, 22) zumindest drehfest angeordnet ist.

15. Luftansaugkanalsystem nach einem der Ansprüche 1 bis 10, **dadurch gekennzeichnet, daß** das Luftansaugkanalsystem (1) ein Gehäuseoberteil (7) und ein Gehäuseunterteil (6) aufweist, welche im zusammen gesetzten Zustand einen zentralen Sammeleinlaßkanal und mehrere um den zentralen Sammeleinlaßkanal angeordnete Einzelansaugkanäle (2) bilden, wobei jeder Einzelansaugkanal (2) in seinem in Strömungsrichtung der Luft gelegenen Endabschnitt (29) eine Klappenvorrichtung (3) aufweist, welche als Drall- oder Tumbleklappenvorrichtung dient, wobei durch Drehung der in das zumindest eine Einschubelement (8) reichenden Welle (4) mittels der Stellvorrichtung (9) ein frei durchströmbarer Querschnitt jedes Einzelansaugkanals (2) regelbar ist und wobei das zumindest eine Einschubelement (8) zwischen dem Oberteil (7) und dem Unterteil (6) des Luftansaugkanalsystems (1) angeordnet ist und mit dem Positionssensor (10) fest verbunden ist.

16. Luftansaugkanalsystem nach Anspruch 15, **dadurch gekennzeichnet, daß** das zumindest eine Einschubelement (8) mit seinen begrenzenden radialen und axialen Außen- und Innenwänden (14, 17, 18) einstückig hergestellt ist.
